# EUROPÄISCHE PATENTANMELDUNG

(11) **EP 2 632 055 A1**
(43) Veröffentlichungstag der Anmeldung: **28.08.2013**
(21) Anmeldenummer: 13000931.9
(22) Anmeldetag: 25.02.2013
(51) Int. Cl.: H04B 5/00, H04B 1/59, G06Q 20/32

(54) **Kontaktlos-Transaktion mit einem Kontaktlos-Kommunikationselement**

(30) Priorität: 27.02.2012 DE 102012003861
(71) Anmelder: Giesecke & Devrient GmbH, 81677 München (DE)
(72) Erfinder: Finkenzeller, Klaus, 85774 Unterföhring (DE)

(57) **Zusammenfassung**

Bei einem Verfahren zum Ausführen einer Kontaktlos-Transaktion zwischen einer Transaktionsanordnung (10; 12, 12, 13) und einem Kontaktlos-Kommunikationselement (30, 31, 32, 33), welches sich in einem von der Transaktionsanordnung (10; 11, 12, 13) erzeugten elektromagnetischen Kommunikationsfeld (16) befindet, lokalisiert die Transaktionsanordnung (10; 11, 12, 13) in dem Kommunikationsfeld (16) zunächst ein Kontaktlos-Kommunikationselement (30) einer Person (40) gemäß vorgegebenen Kriterien (S6) und führt die Kontaktlos-Transaktion anschließend mit dem lokalisierten Kontaktlos-Kommunikationselement (30) aus (S10). Dabei wählt die Transaktionsanordnung (10; 11, 12, 13) das Kontaktlos-Kommunikationselement (30) der Person (40) aus mehreren in dem Kommunikationsfeld (16) lokalisierbaren Kontaktlos-Kommunikationselementen (31, 32, 33) anderer Personen (41, 42, 43) gemäß den vorgegebenen Kriterien aus (S7).

## Beschreibung

Die vorliegende Erfindung betrifft ein Verfahren zum Ausführen einer Kontaktlos-Transaktion zwischen einer Transaktionsanordnung und einem Kontaktlos-Kommunikationselement sowie ein derartiges Kontaktlos-Kommunikationselement, einen portablen Datenträger mit einem derartigen Kontaktlos-Kommunikationselement, eine Transaktionsanordnung sowie ein Transaktionssystem.

Kontaktlos-Transaktionen, zum Beispiel zum kontaktlosen Bezahlen eines Warenkaufs oder Nachweisen einer Identität oder Berechtigung, werden immer populärer. Bei derzeitigen technischen Lösungen, beispielsweise mittels Chipkarten, die mit einer Antenne ausgestattet sind, oder mit Telekommunikationsendgeräten über ein W-LAN- oder Mobilfunknetz, ist es in der Regel erforderlich, dass die betreffende Person die Karte oder das Gerät in die Hand nimmt, beispielsweise um eine Identifikationsnummer einzugeben oder anderweitige Manipulationen durchzuführen, zum Beispiel zur Freigabe der Kontaktlos-Transaktion. Dies ist einerseits unpraktisch und andererseits auch unsicher, da umstehende Personen Informationen darüber erhalten können, wo die betreffende Person die Karte oder das Gerät untergebracht hat.

Daneben sind Nahfeld-Lösungen bekannt, wie zum Beispiel die RFID-Technologie ("Radio-Frequency Identification"), bei der ein kennzeichnender Code oder eine Information zu einem Gegenstand aus einem RFID-Transponder ausgelesen werden kann, mit dem der Transponder im Zusammenhang steht. Solche Transponder können aber auch als Geldkarten eingesetzt werden, bei deren Benutzung der Transponder allerdings auf wenige Zentimeter an ein Leseterminal herangeführt werden muss. Auch hier liegen die oben genannten Praktikabilitäts- und Sicherheitsprobleme vor. Abhängig von der räumlichen Gestaltung eines Verkaufsraumes könnten die in der Regel stationären Leseterminals für das Auge des Betrachters störend sein.

Demnach ist es die Aufgabe der vorliegenden Erfindung, Kontaktlos-Transaktionen einfacher zu gestalten und dabei das bekannten Sicherheitsniveau noch zu erhöhen oder wenigstens beizubehalten.

Diese Aufgabe wird erfindungsgemäß durch ein Verfahren, ein Kontaktlos-Kommunikationselement, einen portablen Datenträger, eine Transaktionsanordnung sowie ein Transaktionssystem mit den Merkmalen der unabhängigen Ansprüche gelöst. Die davon abhängigen Ansprüche beschreiben vorteilhafte Ausgestaltungen und Weiterbildungen der Erfindung.

Eine Kontaktlos-Transaktion wird zwischen einer Transaktionsanordnung und einem tragbaren Kontaktlos-Kommunikationselement ausgeführt, welches von einer Person mitgeführt wird und sich in einem von der Transaktionsanordnung erzeugten elektromagnetischen Kommunikationsfeld befindet. Erfindungsgemäß lokalisiert die Transaktionsanordnung hierzu zunächst eindeutig ein in dem Kommunikationsfeld befindliches Kontaktlos-Kommunikationselement einer Person nach vorgegebenen Kriterien und führt die Kontaktlos-Transaktion anschließend mit dem lokalisierten Kontaktlos-Kommunikationselement aus.

Aufgrund der eindeutigen und reproduzierbaren Kriterien unterliegenden Lokalisierung eines Kontaktlos-Kommunikationselements ist es nicht erforderlich, dass die betreffende Person ihr Kontaktlos-Kommunikationselement gegenüber einer Leseeinrichtung oder einem Leseterminal präsentiert oder manuelle Handlungen an dem Kontaktlos-Kommunikationselement vornimmt. Dies macht einen Bezahlvorgang für die betreffende Person praktischer und andere Personen erhalten keine Kenntnis über den Aufenthaltsort des Kontaktlos-Kommunikationselements bei der Person. Letzteres erhöht die Sicherheit für die Person.

Sofern sich mehrere Kontaktlos-Kommunikationselemente verschiedener Personen in dem Kommunikationsfeld befinden, werden diese alle oder zumindest großteils lokalisiert, um genau dasjenige Kontaktlos-Kommunikationselement bestimmen zu können, dessen Position die vorgegebenen Kriterien überhaupt oder am besten erfüllt. Dieses wird dann ausgewählt, um die Kontaktlos-Transaktion korrekt und gegenüber der gewünschten Person auszuführen.

Die vorgegebenen Lokalisierungskriterien stellen hierbei sicher, dass ein bestimmtes Kontaktlos-Kommunikationselement nach reproduzierbaren Maßstäben ausgewählt wird. Hierbei kann es sich beispielsweise um geometrische und/oder topologische Kriterien handeln, im einfachsten Fall um eine bestimmte feste Position in dem Kommunikationsfeld, an der sich ein Kontaktlos-Kommunikationselement befinden muss, damit es für die Kontaktlos-Transaktion lokalisiert wird und ausgewählt werden kann.

Die Lokalisierung ist vorzugsweise eine Echtzeit-Lokalisierung, so dass die Transaktionsanordnung davon ausgehen kann, dass es sich bei einer lokalisierten Position tatsächlich um die aktuelle Position des Kontaktlos-Kommunikationselements in dem Kommunikationsfeld handelt und nicht etwa um eine Position in der Vergangenheit oder eine möglicherweise bereits verlassene Position. Deshalb besitzen die Transaktionsanordnung und die Kontaktlos-Kommunikationselemente eine Echtzeitlokalisierungs-Funktionalität (RTL, "Real Time Localisation") und bilden zusammen ein sogenanntes RTL-System (RTLS), welches die dynamische und kontinuierliche Lokalisierung der Kontaktlos-Kommunikationselemente in dem Kommunikationsfeld ermöglicht.

Vorzugsweise ist das Kontaktlos-Kommunikationselement als UHF-RFID-Transponder ausgestaltet, zum Beispiel in Form eines Etiketts oder Stickers, der in dem Kommunikationsfeld durch hochfrequente Radiowellen mit einer Leseeinrichtung der Transaktionsanordnung gekoppelt ist (ISO/IEC/18000-63). Derartige UHF-RFID-Etiketten arbeiten in einem elektromagnetischen Fernfeld bei einer Distanz von bis zu 10 m zu einer felderzeugenden Sendeeinrichtung der Transaktionsanordnung.

Entsprechend umfasst eine erfindungsgemäße Transaktionsanordnung eine Sendeeinrichtung, die das elektromagnetische Kommunikationsfeld bzw. Fernfeld erzeugt, und eine Leseeinrichtung, die gemäß dem Master-Slave-Prinzip der RFID-Kommunikation Anfragesignale an Kontaktlos-Kommunikationselemente überträgt und von diesen Antwortsignale empfängt.

Die Antwortsignale der Kontaktlos-Kommunikationselemente sind in der Lokalisierungsphase zunächst im Wesentlichen Lokalisierungssignale, denen Informationen über die aktuelle Position eines Kontaktlos-Kommunikationselements in dem Kommunikationsfeld entnommen werden können. Nach der Lokalisierung desjenigen Kontaktlos-Kommunikationselements, welches die vorgegebenen Kriterien erfüllt, sind die Antwortsignale im Wesentlichen Datensignale, die die Übertragung von geldwerten Einheiten oder anderweitigen transaktionsrelevanten Informationen betreffen.

Die Transaktionsanordnung umfasst schließlich eine Steuereinrichtung, die die aus dem Kommunikationsfeld empfangenen Lokalisierungssignale gemäß den vorgegebenen Kriterien bewertet, das betreffende Kontaktlos-Kommunikationselement lokalisiert und für die Transaktion auswählt sowie die Durchführung der eigentlichen Transaktion steuert und überwacht. Die Steuereinrichtung ist hierbei ein wesentliches Element der RTL-Funktionalität der Transaktionsanordnung, denn diese bewirkt das kontinuierliche Abfragen von Lokalisierungssignalen bei den Kontaktlos-Kommunikationselementen durch entsprechende Anfragesignale, wertet die empfangenen Lokalisierungssignale in Echtzeit aus und erzeugt auf diese Weise eine dynamische Information über die aktuellen Positionen aller Kontaktlos-Kommunikationselemente in dem Kommunikationsfeld.

Vorzugsweise ist das Kontaktlos-Kommunikationselement der Person an einem portablen Datenträger angebracht oder angeordnet, der dieser Person eindeutig zugeordnet ist, beispielsweise an einer auf diese Person personalisierten Chipkarte oder an einem Telekommunikationsendgerät mit einer auf diese Person personalisierten Mobilfunkkarte. Die Kontaktlos-Transaktion wird dann zu Lasten eines Kontos der Person ausgeführt, welches dem betreffenden Kontaktlos-Kommunikationselement eindeutig zugeordnet ist. Eine elektronische oder anderweitige informationstechnische Verbindung zwischen dem portablen Datenträger und dem darauf angebrachten Kontaktlos-Kommunikationselement besteht vorzugsweise nicht. Das dem Kontaktlos-Kommunikationselement zugeordnete Konto ist also verschieden von einem etwaigen Giro-, Kreditkarten- oder anderweitigen Konto, welches über den portablen Datenträger belastbar ist, an dem das Kontaktlos-Kommunikationselement angebracht ist.

Vorzugsweise betreffen die vorgegebenen Lokalisierungskriterien eine Distanz und/oder einen Winkel zwischen dem Kontaktlos-Kommunikationselement und einem Bezugspunkt oder einem Bezugsbereich, der von der Transaktionsanordnung bestimmt wird. Ebenso sind Lokalisierungskriterien möglich, die eine relative Position oder sonstige geometrische oder topologische Kriterien in beliebigen Koordinatensystemen mit einem von der Transaktionsanordnung vorgegebenen Bezugspunkt oder Bezugsbereich in Beziehung setzen.

So kann beispielsweise dasjenige Kontaktlos-Kommunikationselement lokalisiert und ausgewählt werden, welches eine bestimmte relative Position gegenüber der Position der Leseeinrichtung der Transaktionsanordnung einnimmt, die dann als Bezugspunkt herangezogen wird. Hierbei können Koordinaten basierend auf Abstand und Winkel zum Einsatz kommen oder flächige oder räumliche kartesische Koordinatensysteme oder auch Triangulationstechniken.

In dieser Weise kann auch geprüft werden, ob sich ein Kontaktlos-Transaktionselement an einem bestimmten Bezugspunkt vor einem Verkaufsschalter oder -stand befindet, der sich aus der Position einer oder mehrerer Lesevorrichtungen ergibt. Hierbei ist eine felderzeugende Sendeeinrichtung der Transaktionsanordnung derart zu positionieren, dass die Leseeinrichtung und der vorbestimmte Bezugspunkt bzw. Bezugsbereich innerhalb des aufgebauten Kommunikationsfeldes liegen.

Gemäß einer bevorzugten Ausführungsform umfasst die Transaktionsanordnung selbst auch ein oder mehrere Kontaktlos-Kommunikationselemente, die von den Kontaktlos-Kommunikationselementen der Personen verschieden sind, die sich in dem Kommunikationsfeld befinden. Während erstere Bestandteile der Transaktionsanordnung sind, sind letztere dies nicht. Der Bezugspunkt oder Bezugsbereich, der zur Prüfung der vorgegebenen Kriterien bestimmt wird, muss dann nicht durch die Position einer gegebenenfalls ortsfesten Leseeinrichtung definiert werden, sondern kann relativ zu der beweglichen Position des einen oder der mehreren Kontaktlos-Kommunikationselemente der Transaktionsanordnung ermittelt werden.

So kann beispielsweise eine Bedienperson in einer Waren-/ Dienstleistungsverkaufssituation zumindest ein Kontaktlos-Kommunikationselement der Transaktionsanordnung bei sich tragen, welches einen sich mit der Bedienperson mitbewegenden Bezugspunkt bestimmt. Ebenso kann die Bedienperson zwei oder mehr Kontaktlos-Kommunikationselemente der Transaktionsanordnung bei sich tragen, aus deren relativen Positionen zueinander die Steuereinrichtung einen Bezugspunkt oder Bezugsbereich zur Prüfung der vorgegebenen Lokalisierungskriterien ableiten kann. Zum Beispiel können zwei Kontaktlos-Kommunikationselemente eine gerichtete Gerade in Relation zu der Bedienperson definieren, so dass sich ein Bezugsbereich entlang dieser Gerade durch den Raum erstreckt. Lokalisiert wird dann dasjenige Kontaktlos-Kommunikationselement einer Person, welches innerhalb des Bezugsbereiches liegt und eine bestimmte maximale Distanz zu der Bedienperson nicht überschreitet.

Die vorgegebenen Kriterien, gemäß denen ein Kontaktlos-Kommunikationselement einer Person lokalisiert wird, können demzufolge eine Distanz mit einem Winkel betreffen, die sich aus dem Bezugsbereich entlang der gerichteten Gerade ergeben. Ebenso kann eine relative Position oder eine sonstige geometrische oder topologische Relation zwischen dem Kontaktlos-Kommunikationselement einer Person und einem Bezugspunkt oder Bezugsbereich ausgewertet werden, welcher sich abhängig von den mit der Bedienperson mitwandernden Kontaktlos-Kommunikationselementen der Transaktionsanordnung ergibt.

Durch die Bildung mitwandernder Bezugspunkte oder Bezugsbereiche durch tragbare und an der Bedienperson angebrachte Kontaktlos-Kommunikationselemente der Transaktionsanordnung kann eine besonders genaue Differenzierung zwischen verschiedenen Kontaktlos-Kommunikationselementen verschiedener Personen in einem Verkaufsraum oder Verkaufsbereich erreicht werden, selbst wenn sich diese Personen in unmittelbarer örtlicher Nähe zueinander befinden. Denn die Bedienperson kann den Bezugspunkt oder Bezugsbereich aktiv beeinflussen und situationsabhängig verändern und somit diejenige Person selbständig auswählen, zu deren Lasten die anstehende Kontaktlos-Transaktion ausgeführt werden soll. Zum Beispiel kann die Bedienperson hierzu mit einem Arm auf die betreffende Person deutet, an dem zwei Kontaktlos-Kommunikationselemente angebracht sind.

Sobald ein Kontaktlos-Kommunikationselement einer Person gemäß den vorgegebenen Kriterien lokalisiert und für die Kontaktlos-Transaktion ausgewählt ist, wird der Person die Möglichkeit gegeben, die Bedingungen der Transaktion zu bestätigen, zum Beispiel den geforderten Preis der gewünschten Leistung. Die bestätigte Kontaktlos-Transaktion wird dann von der Bedienperson ausgelöst, zum Beispiel indem die Bedienperson mit den an ihr angebrachten Kontaktlos-Kommunikationselementen der Transaktionsanordnung ein bestimmtes Bewegungs- und/oder Beschleunigungsmuster vollzieht, beispielsweise durch eine charakteristische Armbewegung, sofern ihre Kontaktlos-Kommunikationselemente zum Beispiel am Handgelenk und der Schulter angebracht sind.

Schließlich wird der erfolgreiche Abschluss der Kontaktlos-Transaktion der Bedienperson und der Person mitgeteilt, zum Beispiel durch ein geeignetes akustisches oder optisches Signal, welches von einer Signalisierungseinrichtung erzeugt wird, beispielsweise von einem entsprechend ausgestatteten Kontaktlos-Kommunikationselement oder Telekommunikationsendgerät der Bedienperson oder einer zusätzlichen Komponente der Transaktionsanordnung, zum Beispiel einer Anzeige- oder Benachrichtigungseinrichtung oder dergleichen.

Vorzugsweise sind geeignete Fehlerkorrekturmechanismen und/oder Verifikationsmechanismen auf Seiten der Transaktionsanordnung bzw. der Steuereinrichtung implementiert, um Kollisionen mit Kontaktlos-Kommunikationselementen anderer Personen oder weiterer Bedienpersonen zu vermeiden bzw. um die jeweiligen Kontaktlos-Kommunikationselemente von Personen in dem Verkaufsbereich zuverlässig zu trennen und individuell zu lokalisieren bzw. zu verfolgen.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit den beiliegenden Zeichnungen, die zeigen:
- Figur 1: einen schematischen Ablauf des erfindungsgemäßen Verfahrens;
- Figur 2: eine erste Ausführungsform der vorliegenden Erfindung; und
- Figur 3: eine zweite Ausführungsform der vorliegenden Erfindung.

Die nachfolgend beschriebenen Ausführungsformen gehen von einer Echtzeit-Lokalisierungstechnologie aus, wie zum Beispiel der RTLS-Technologie nach ISO/IEC 19762-5 ("Real-Time Localisation System"). Ein solches RTLS-System umfasst eine Sendeeinrichtung zum Erzeugen eines elektromagnetischen Kommunikationsfeldes und ein oder mehrere stationäre oder mobile Lesegeräte zum Empfangen von Lokalisierungs- und Informationssignalen von zugehörigen RTLS-Etiketten oder RTLS-Tags, die über die Lokalisierungssignale geortet bzw. örtlich lokalisiert werden können. Die Ortung bzw. Lokalisierung erfolgt hierbei kontinuierlich mit derart geringen Zeitintervallen, dass eine Echtzeit-Lokalisierung der RTLS-Tags möglich ist. Das RTLS-System kennt also zu jedem beliebigen Zeitpunkt die genaue Position jedes RTLS-Tags in dem Kommunikationsfeld.

Abhängig von den physikalischen Eigenschaften des Kommunikationsfeldes, der Lokalisierungssignale und der Antenne des RTLS-Tags kann die örtliche Auflösung bzw. Genauigkeit eines RTLS-Systems im Bereich von wenigen Zentimetern liegen, beispielsweise bei etwa 10 Zentimetern pro Flächen- oder Raumachse. Für die bevorzugten Anwendungsszenarien der vorliegenden Erfindung ist eine solche örtliche Auflösungen ausreichend, sie kann vielmehr auch noch bei einer örtlichen Auflösung von 30 oder mehr Zentimetern sinnvoll betrieben werden.

Gemäß der vorliegenden Erfindung kann ein RTLS-System, welches diese Anforderungen erfüllt, basierend auf der RFID-Technologie ("Radio-Frequency Identification") gemäß ISO/IEC 19762-3 realisiert werden. Daneben sind aber auch andere geeignete Kontaktlos-Kommunikationstechnologien möglich, zum Beispiel W-LAN bzw. Wi-Fi-Funktechnologien gemäß dem IEEE-Standard 802.11.

Die nachfolgende Beschreibung von bevorzugten Ausführungsformen geht von RTLS-fähigen RFID-Transpondern bzw. RTLS-RFID-Tags aus, die Erfindung ist hierauf jedoch nicht beschränkt. Insbesondere basieren die nachfolgenden Ausführungsformen auf einem UHF-Kommunikationsfeld ("Ultra High Frequency"), so dass die betreffenden RTLS-RFID-Tags auch im elektromagnetischen Fernfeld kontinuierlich lokalisiert und von dem UHF-RTLS-System in Echtzeit verfolgt werden können.

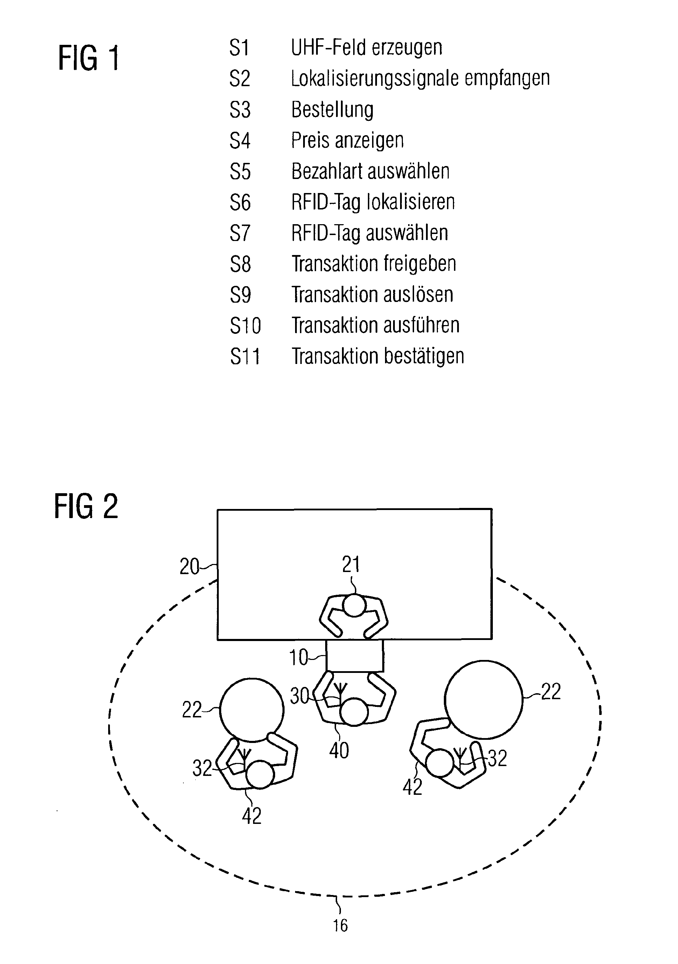

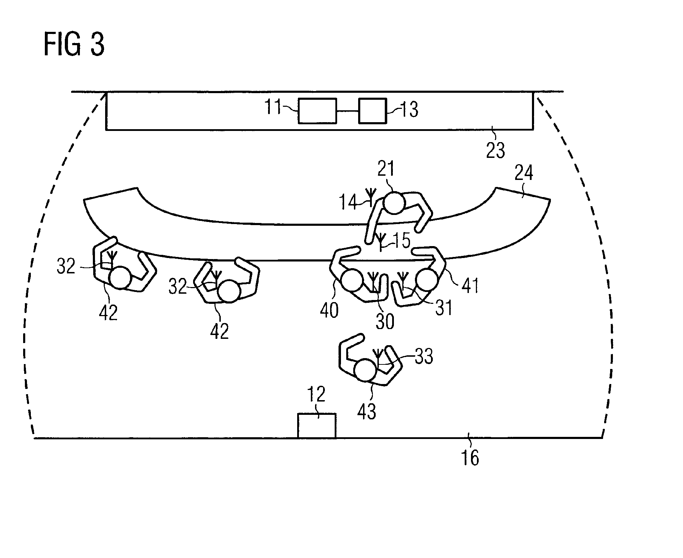

Bei den in den Figuren 2 und 3 gezeigten Transaktions- bzw. Bezahlsystemen kommen auf Seiten der Person 40 (Kunde) und der weiteren Personen 41, 42, 43 (potentielle Kunden), die sich in einem UHF-Kommunikationsfeld 16 befinden, passive und UHF-fähige RTLS-RFID-Tags 30, 31, 32, 33 zum Einsatz ("UHF-RTLS-RFID-Tags"). Je nach Ausgestaltung der Antenne der RTLS-RFID-Tags 30-33 ist eine Reichweite von 10 Metern und mehr möglich, wobei die Energieversorgung der RTLS-RFID-Tags 30-33 über das UHF-Kommunikationsfeld sicherstellt wird.

Die RTLS-RFID-Tags 30-33 sind als Klebeetiketten bzw. Sticker oder Aufkleber ausgestaltet und können prinzipiell an beliebigen Gegenständen der Personen 40-43 angebracht werden. Es wird im Zusammenhang mit den Figuren jedoch angenommen, dass die RTLS-RFID-Tags 30-33 an portablen, kartenförmigen Datenträgern (nicht dargestellt) angebracht sind, zum Beispiel an Chipkarten, Kreditkarten, Geldkarten, ID-Karten oder dergleichen, die möglicherweise Zugang zu einem zugeordneten Konto der betreffenden Person 40-43 bieten. Die RTLS-RFID-Tags 30-33 können aber auch an Telekommunikationsendgeräten der Personen 40-43 angebracht sein, beispielsweise an ein Mobilfunktelefon, dessen Mobilfunkkarte, an einen tragbaren Computer, PDA, Tablet-Computer oder dergleichen. Telekommunikationsendgeräte bieten aufgrund ihres Internetzugangs über ein Mobilfunknetz häufig auch Zugang zu persönlichen Konten der betreffenden Personen 40-43. Daneben ist es natürlich grundsätzlich möglich, RTLS-RFID-Tags an jeden beliebigen anderen Gegenstand anzuheften, den die betreffende Person üblicherweise bei sich trägt, zum Beispiel eine Geldbörse, einen Ausweis oder dergleichen.

Die RTLS-RFID-Tags 30-33 sind neben ihrer RTLS-Funktionalität auch mit der üblichen RFID-Funktionalität ausgestattet. Sie halten also statische oder dynamische Daten bereit, die bestimmte Gegenstände der Personen 40-43 identifizieren oder spezifizieren und somit auch Zugang zu einem persönlichen Konto bieten können, welches aber verschieden ist von einem Konto der Person 40-43, welches über einen portablen Datenträger zugänglich ist, an dem das RTLS-RFID-Tag 30-33 angebracht ist. Es kann sinnvoll sein, dass die RTLS-RFID-Tags 30-33 weitergehend ausgestaltet sind und beispielsweise mit einem Prozessor und darauf ausführbaren Applikationsprogrammen ausgestattet sind, zum Beispiel mit Geldbörsenanwendungen, Sicherheitsanwendungen zur kryptographischen Datensicherung oder dergleichen.

Das in Figur 1 schrittweise skizzierte Verfahren wird nachfolgend zunächst im Zusammenhang mit der Ausführungsform gemäß Figur 2 erläutert. Diese zeigt eine Verkaufs- bzw. Bezahlsituation an einem Verkaufsstand 20, beispielsweise einem Kiosk, einem Einzelhandelsgeschäft oder dergleichen. Der Verkaufsstand 20 ist mit einer UHF-RTLS-Transaktionsanordnung 10 ausgestattet, die eine Sendeeinrichtung und eine Leseeinrichtung umfasst. Der Verkaufsstand 20 kann zusätzlich auch Verkaufsständer 22 oder anderweitige den Verkaufsraum strukturierende Vorrichtungen aufweisen.

Die UHF-RTLS-Transaktionsanordnung 10 wird von der Bedienperson 21 genutzt, um eine kontaktlose Transaktion gegenüber einen RTLS-RFID-Tag 30 einer Person 40 über das UHF-Feld 16 durchzuführen. Diese Transaktion betrifft einen Bezahlvorgang, dem die Person 40 als Kunde an dem Verkaufsstand 20 vornehmen möchte. Bei der Verkaufssituation gemäß Figur 2 ist aufgrund eine großen Anzahl an dargebotenen Waren der Bedienbereich vor einem Verkaufsschalter oder -fenster, an dem die Person 40 als Kunde mit der Bedienperson 21 in Kontakt treten kann, räumlich beschränkt.

Die UHF-RTLS-Transaktionsanordnung 10 ist hierbei in unmittelbarer Nähe des Bedienbereichs vor dem Verkaufsschalter oder -fenster angebracht. Beispielsweise kann eine Sendeeinrichtung der UHF-RTLS-Transaktionsanordnung 10, die das UHF-Feld 16 erzeugt, unterhalb des Bedienbereichs angeordnet sein und eine entsprechende Leseeinrichtung bzw. ein Signalempfänger oberhalb dieses Bedienbereichs. Weitere Personen 42 befinden sich als potentielle Kunden mit ihren jeweiligen RTLS-RFID-Tags 32 auch in dem Verkaufsraum des Verkaufsstandes 20.

Nach dem Erzeugen des UHF-Felds 16 in Schritt S1 werden alle RTLS-RFID-Tags 30, 32 im Bereich des UHF-Felds 16 in Echtzeit geortet und lokalisiert, indem die passiven RTLS-RFID-Tags 30, 32 kontinuierlich durch Anfragesignale abgefragt werden, auf die die RTLS-RFID-Tags 30, 32 mit Lokalisierungssignalen antworten. Diese werden dann von einer Steuereinrichtung der Transaktionsanordnung 10 zur Echtzeit-Lokalisierung der RTLS-RFID-Tags 30, 32 ausgewertet. Die UHF-Transaktionsanordnung 10 ist damit in Echtzeit über die Positionen aller RFID-Tags 30, 32 informiert und kann im Bedarfsfalls dasjenige RTLS-RFID-Tag 30 auswählen, welches bestimmte vorgegebenen Kriterien erfüllt, um gegenüber diesem eine kontaktlose Bezahltransaktion vorzunehmen.

In Schritt S3 nimmt die Person 40 ihre Waren- oder Dienstleistungsbestellung gegenüber der Bedienperson 21 vor. Diese soll durch eine kontaktlose Bezahltransaktion über das RTLS-RFID-Tag 30 zu Lasten eines Kontos der Person 40 bezahlt werden.

In Schritt S4 wird der Person 40 der Preis der bestellten Ware oder Dienstleistung mitgeteilt, beispielsweise mündlich durch die Bedienperson 21 oder über eine geeignete Anzeigeneinrichtung, zum Beispiel einen Monitor oder eine Kasse (nicht dargestellt), die Bestandteil der UHF-RTLS-Transaktionsanordnung 10 sein kann. In Schritt S5 wählt die Person 40 die gewünschte Bezahlart aus, in diesem Fall also das Bezahlen durch eine kontaktlose Transaktion mittels des RTLS-RFID-Tags 30.

In Schritt S6 lokalisiert die UHF-RTLS-Transaktionsanordnung 10 bzw. eine Steuereinrichtung derselben das RTLS-RFID-Tag 30 der Person 40 nach vorgegebenen Kriterien. Diese Kriterien umfassen bei der Ausführungsform gemäß Figur 2 beispielsweise eine Prüfung, ob sich das RTLS-RFID-Tag 30 in einer bestimmten Position unmittelbar vor der Verkaufseinrichtung 20 bzw. der dort positionierten UHF-RTLS-Transaktionsanordnung 10 befindet. Eine solche Position kann auch für die Person 40 sichtbar markiert sein, zum Beispiel durch eine Farbmarkierung auf dem Boden. Bei der Lokalisierung gemäß Schritt S6 werden die von dem RTLS-RFID-Tag 30 angeforderten Lokalisierungssignale von der UHF-RTLS-Transaktionseinrichtung 10 hinsichtlich geometrischer Kriterien ausgewertet, wie zum Beispiel Abstand und Winkel des RTLS-RFID-Tags 30 relativ zu der Position der UHF-Transaktionsanordnung 10 oder einem sonstigen Bezugspunkt oder Bezugsbereich, den die UHF-RTLS-Transaktionseinrichtung 10 vorgibt.

Nach erfolgreicher Lokalisierung des RTLS-RFID-Tags 30 wird dieses in Schritt S7 schließlich zur Durchführung der erforderlichen Bezahltransaktion ausgewählt.

Die gemäß Figur 1 in Schritt S8 vorgesehene Freigabe der Bezahltransaktion durch die Person 40 kann auch an einer anderen geeigneten Stelle des Verfahrens gemäß Figur 1 erfolgen, beispielsweise unmittelbar nach dem Schritt S5. Die Freigabe erfolgt ohne dass die Person 40 ihr RTLS-RFID-Tag 30 hierzu benötigt oder mit ihm interagieren oder dieses manipulieren muss durch mündliche Zustimmung oder durch Ausführen einer bestimmten Bewegung oder Geste mit dem RTLS-RFID-Tag 30 oder dergleichen.

In den Schritten S9 und S10 wird die freigegebene Bezahltransaktion schließlich von der Bedienperson 21 aktiv ausgelöst und durch einen kontaktlosen Kommunikationsvorgang zwischen der UHF-RTLS-Transaktionsanordnung 10 und dem RTLS-RFID-Tag 30 zu Lasten desjenigen Kontos der Person 40 ausgeführt, zu welchem das RTLS-RFID-Tag 30 einen Zugang besitzt.

Schließlich dient die Bestätigung der Transaktion in Schritt S11 dazu, der Bedienperson 21 und der Person 40 den erfolgreichen Abschluss des kontaktlosen Bezahlvorgangs mitzuteilen, beispielsweise durch optische oder akustische Bestätigungssignale durch die UHF-RTLS-Transaktionsanordnung 10, durch ein Telekommunikationsendgerät der Bedienperson 21 und/oder der Person 40 oder dergleichen.

Sofern in Schritt S6 keine eindeutige Lokalisierung des RTLS-RFID-Tags 30 der Person 40 möglich ist, beispielsweise weil weitere Personen 42 mit ihren eigenen RTLS-RFID-Tags 32 derart nahe an der Person 40 mit dem RTLS-RFID-Tag 30 stehen, dass die örtliche Auflösung der UHF-RTLS-Transaktionsanordnung 10 nicht ausreicht, diese getrennt zu lokalisieren, wird die Bezahltransaktion mit einem entsprechenden Fehlersignal gegenüber der Person 40 und der Bedienperson 21 abgebrochen.

Eine weniger klare Struktur eines Bezahlvorgangs zeigt die Verkaufssituation in Figur 3, bei der sich eine Bedienperson 21 hinter einem größeren Verkaufstisch bzw. -tresen 24 befindet und sich vor diesem Tresen 24 in einem Verkaufsraum eine Vielzahl von Personen 40-43 aufhalten, der keine baulichen oder anderweitigen Strukturierungen aufweist, die die Lokalisierung eines RTLS-RFID-Tags 30 begünstigen würden. Die Lokalisierung und Auswahl des RTLS-RFID-Tags 30 der Person 40, die gerade eine Leistung von der Bedienperson 21 entgegennimmt, ist bei dieser Ausführungsform also wesentlich schwieriger.

Die vorgegebenen Kriterien, gemäß denen das RTLS-RFID-Tag 30 lokalisiert und für eine Bezahltransaktion ausgewählt wird, ist bei der Ausführungsform gemäß Figur 3 jedoch nicht abhängig von einem festen Bezugspunkt oder Bezugsbereich wie bei der Ausführungsform gemäß Figur 2, sondern vielmehr abhängig von einem beweglichen und variablen Bezugspunkt bzw. Bezugsbereich, der durch ein RTLS-RFID-Tag 15 bzw. zwei RTLS-RFID-Tags 14,15 definiert wird, die die Bedienperson 21 mit sich führt.

Das RTLS-RFID-Tag 30 der Person 40 wird dadurch lokalisiert, dass es sich in einem variablen Bezugsbereich befindet, welcher durch das RTLS-RFID-Tag 15 der Bedienperson 21 definiert wird, welches sich an dessen Unterarm bzw. Hemdmanschette oder Uhr befindet. Die Bedienperson 21 kann also zur Lokalisierung und Auswahl des RTLS-RFID-Tags 30 sein eigenes RTLS-RFID-Tag 15 auf die Person 40 richten, so dass das RTLS-RFID-Tag 30 relativ zu der aktuellen Position des RTLS-RFID-Tags 15 innerhalb eines vorgegebenen Bezugsbereichs liegt, zum Beispiel innerhalb eines vorgegebenen Radius um das RTLS-RFID-Tag 15 herum.

Entsprechend kann die begonnene Bezahltransaktion zwischen der UHF-RTLS-Transaktionsanordnung 10 und dem RTLS-RFID-Tag 40 gemäß Schritt S9 dann durch ein gezieltes Bewegungsmuster oder Beschleunigungsmuster des RFID-Tags 15 durch die Bedienperson 21 ausgelöst werden, beispielsweise indem diese eine bestimmte Armbewegung oder Geste mit einer bestimmten Geschwindigkeit durchführt. Der RTLS-RFID-Tag 15 ist hierzu mit einem Beschleunigungssensor ausgestattet, der von der UHF-RTLS-Transaktionsanordnung 10 auslesbar ist.

Gemäß Figur 3 umfasst die UHF-RTLS-Transaktionsanordnung 10 zumindest einen Sender 12, der das UHF-Feld 16 erzeugt, eine in eine Rückwand 23 eingebaute Leseeinrichtung 11, die die RFID-Tags 14, 15, 30-33 lokalisieren und deren Daten auslesen kann, sowie eine mit der Leseeinrichtung 11 verbundene Steuereinrichtung 13, die die notwendigen Berechnungen im Zusammenhang mit dem Lokalisierungsschritt S6 und der Prüfung, ob und auf welches RTLS-RFID-Tag 30, 31 die vorgegebenen Lokalisierungskriterien zutreffen, durchführt.

Ein einfaches denkbares Lokalisierungskriterium ist die Distanz zwischen dem RTLS-RFID-Tag 15 der Bedienperson 21 und den RFID-Tags 30-33 der Personen 40-43. Bei dem Lokalisierungsschritt S6, bei dem die Position des RTLS-RFID-Tags 30 der Person 40 in dem UHF-Feld 16 geprüft wird, werden auch gleichzeitig Lokalisierungssignale der anderen RTLS-RFID-Tags 31-33 berücksichtigt, damit die Position des RTLS-RFID-Tags 30 gegenüber den Positionen der weiteren RTLS-RFID-Tags 31-33 abgegrenzt werden kann, um das nächstliegende RTLS-RFID-Tag 30 für die anstehende Bezahltransaktion zu lokalisieren und auszuwählen.

Sofern hierbei der Fall auftritt, dass das RTLS-RFID-Tag 30 nicht mit ausreichender Zuverlässigkeit als das nächstliegende RTLS-RFID-Tag erkannt werden kann, zum Beispiel weil das RTLS-RFID-Tag 31 der benachbarten Person 41 sich zu nahe bei dem RTLS-RFID-Tag 30 befindet, wird die Transaktion entweder abgebrochen oder erneut gestartet, nachdem die Bedienperson 21 ihr RTLS-RFID-Tag 15 neu gegenüber der Person 40 positioniert hat.

Darüber hinaus kann die Bedienperson 21 auch zwei RTLS-RFID-Tags 14,15 bei sich tragen, beispielsweise das RTLS-RFID-Tag 15 an seiner Hand, zum Beispiel in einem Schmuckstück untergebracht, und ein RTLS-RFID-Tag 14 an der Schulter oder am Hemdkragen. Aus den beiden Raumpositionen kann ein Bezugsbereich in Form einer Gerade oder Ellipse in dem UHF-Feld 16 definiert werden. Die vorgegebenen Kriterien sind bei dieser Variante also erfüllt, wenn eine durch die RTLS-RFID-Tags 14, 15 definierte gerichtete Gerade auf das RTLS-RFID-Tag 30 der Person 40 deutet, so dass dieses das der Gerade nächstliegende RTLS-RFID-Tag ist, wobei eine maximale Distanz zwischen den RTLS-RFID-Tags 15 und 30 unterschritten sein muss, damit das RTLS-RFID-Tag 30 auch für die Kontaktlos-Transaktion ausgewählt wird. Dadurch ergibt sich die zuverlässige und von der Bedienperson 21 beeinflussbare Unterscheidung zwischen dem RTLS-RFID-Tag 30 der Person 40 und benachbarten RTLS-RFID-Tags 31-33 weiterer Personen 41-43.

Diese bevorzugte Ausführungsform bietet auch eine Lösung für den Fall, dass die Person 40 ihr RFID-Tag 30 nicht mit sich führt, da es beispielsweise an der Garderobe vergessen wurde. Bei einer Bestellung der Person 40 würde dann fälschlicherweise das RTLS-RFID-Tag 31 der benachbarten Person 41 lokalisiert und für die fällige Transaktion ausgewählt werden, da dieses dann das RTLS-RFID-Tag 31 mit der geringsten Distanz zu dem RTLS-RFID-Tag 15 wäre. Durch den gerichteten Bezugsbereich definiert durch die RTLS-RFID-Tags 14 und 15 der Bedienperson 21 kann die Steuereinrichtung 13 ermitteln, dass sich in der angedeuteten Richtung gerade kein RTLS-RFID-Tag 30 befindet und die Transaktion abgebrochen werden muss, da sie nicht korrekt zulasten der Person 40 durchgeführt werden kann. Die etwaige besondere Nähe des RTLS-RFID-Tag 31 zu dem RTLS-RFID-Tag 15 spielt dann keine Rolle, da die vorgegebenen Kriterien dieses von vorm herein von der Transaktion ausschließen.

Hierbei kann die Steuereinrichtung 13 die RTLS-RFID-Tags 14,15 natürlich getrennt lokalisieren und identifizieren, ebenso wie möglicherweise weitere RTLS-RFID-Tags, die andere Bedienpersonen tragen.

## Patentansprüche

1. Verfahren zum Ausführen einer Kontaktlos-Transaktion zwischen einer Transaktionsanordnung (10; 11, 12, 13) und einem Kontaktlos-Kommunikationselement (30), welches sich in einem von der Transaktionsanordnung (10; 11, 12, 13) erzeugten elektromagnetischen Kommunikationsfeld (16) befindet, **dadurch gekennzeichnet, dass** die Transaktionsanordnung (10; 11, 12, 13) in dem Kommunikationsfeld (16) ein Kontaktlos-Kommunikationselement (30) einer Person (40) gemäß vorgegebenen Kriterien lokalisiert (S6) und die Kontaktlos-Transaktion mit dem lokalisierten Kontaktlos-Kommunikationselement (30) ausführt (S10).

2. Verfahren nach Anspruch 2, **dadurch gekennzeichnet, dass** die Transaktionsanordnung (10; 11, 12, 13) das Kontaktlos-Kommunikationselement (30) der Person (40) aus mehreren in dem Kommunikationsfeld (16) lokalisierbaren Kontaktlos-Kommunikationselementen (31,32,33) anderer Personen (41, 42, 43) gemäß den vorgegebenen Kriterien zum Ausführen der Kontaktlos-Transaktion auswählt (S7).

3. Verfahren nach Anspruch 1 oder 2, **dadurch gekennzeichnet, dass** das Kontaktlos-Kommunikationselement (30) der Person (40) an einem der Person (40) eindeutig zugeordneten portablen Datenträger angebracht wird und die Kontaktlos-Transaktion zu Lasten eines Kontos der Person (40) ausgeführt wird (S10), welchem das Kontaktlos-Kommunikationselement (30) eindeutig zugeordnet ist.

4. Verfahren nach einem der Ansprüche 1 bis 3, **dadurch gekennzeichnet, dass** das Kommunikationsfeld (16) von einer Sendeeinrichtung (12) der Transaktionsanordnung (10) erzeugt wird (S1), wobei eine Steuereinrichtung (13) der Transaktionsanordnung (10) das Kontaktlos-Kommunikationselement (30) durch Auswerten von Lokalisierungssignalen lokalisiert (S6), die zumindest eine Leseeinrichtung (11) der Transaktionsanordnung (10) von dem Kontaktlos-Kommunikationselement (30) empfängt.

5. Verfahren nach einem der Ansprüche 1 bis 4, **dadurch gekennzeichnet, dass** das Kontaktlos-Kommunikationselement (30) der Person (40) gemäß vorgegebenen Kriterien lokalisiert wird (S6), welche eine Distanz und/oder einen Winkel und/oder eine relative Position und/oder eine sonstige geometrische Relation zwischen dem Kontaktlos-Kommunikationselement (30) der Person (40) und einem von der Transaktionsanordnung (10) bestimmten Bezugspunkt oder Bezugsbereich betreffen.

6. Verfahren nach einem der Ansprüche 1 bis 5, **dadurch gekennzeichnet, dass** die Transaktionsanordnung (10; 11, 12, 13) Lokalisierungssignale von einem oder mehreren von dem Kontaktlos-Kommunikationselement (30) der Person (40) verschiedenen Kontaktlos-Kommunikationselementen (14, 15) der Transaktionsanordnung (10; 11, 12, 13) und von dem Kontaktlos-Kommunikationselement (30) der Person (40) empfängt, wobei das Kontaktlos-Kommunikationselement (30) der Person (40) gemäß vorgegebenen Kriterien lokalisiert wird (S6), welche eine Distanz und/oder einen Winkel und/oder eine relative Position und/oder eine sonstige geometrische Relation zwischen dem Kontaktlos-Kommunikationselement (30) der Person (40) und einem Bezugspunkt oder Bezugsbereich betreffen, welcher von der Transaktionsanordnung (10; 11, 12, 13) abhängig von zumindest einem der Kontaktlos-Kommunikationselemente (14,15) der Transaktionsanordnung (10; 11, 12, 13) bestimmt wird.

7. Verfahren nach Anspruch 6, **dadurch gekennzeichnet, dass**
eine Bedienperson (21) der Transaktionsanordnung (10; 11, 12, 13) eines der Kontaktlos-Kommunikationselemente (14, 15) der Transaktionsanordnung (10; 11, 12, 13) bei sich trägt und der Bezugspunkt oder Bezugsbereich anhand der Position des zumindest einen Kontaktlos-Kommunikationselements (14,15) in dem Kommunikationsfeld (16) bestimmt wird oder
die Bedienperson (21) zwei der Kontaktlos-Kommunikationselemente (14,15) der Transaktionsanordnung (10; 11, 12, 13) bei sich trägt und der Bezugsbereich als eine gerichtete Gerade bestimmt wird, die durch die jeweiligen Positionen der beiden Kontaktlos-Kommunikationselemente (14,15) der Transaktionsanordnung (10; 11, 12, 13) in dem Kommunikationsfeld (16) bestimmt wird.

8. Verfahren Anspruch 6 oder 7, **dadurch gekennzeichnet, dass**
die Kontaktlos-Transaktion ausgelöst wird (S9), wenn die Transaktionsanordnung (10; 11, 12, 13) ein vorgegebenes Bewegungs- und/oder Beschleunigungsmuster des zumindest einen der Kontaktlos-Kommunikationselemente (15,15) der Transaktionsanordnung (10; 11, 12, 13) registriert und/oder
die Transaktionsanordnung (10; 11, 12, 13) der Bedienperson (21) einen erfolgreichen Abschluss der Kontaktlos-Transaktion durch ein akustisches oder optisches Signal signalisiert (S11), welches von dem zumindest einen der Kontaktlos-Kommunikationselemente (14,15) der Transaktionsanordnung (10; 11, 12, 13), einem Telekommunikationsendgerät der Bedienperson (21) oder eine Signalisierungseinrichtung der Transaktionsanordnung (10; 11, 12, 13) erzeugt wird.

9. Verfahren nach einem der Ansprüche 1 bis 8, **dadurch gekennzeichnet, dass** die Transaktionsanordnung (10; 11, 12, 13) die Kontaktlos-Transaktion nur ausführt (S10), wenn das lokalisierte Kontaktlos-Kommunikationselement (30) der Person (40) von in dem Kommunikationsfeld (16) auch lokalisierbaren Kontaktlos-Kommunikationselementen (31, 32, 33) anderer Personen (41, 42, 43) zuverlässig unterschieden werden kann.

10. Kontaktlos-Kommunikationselement (30) umfassend eine Echtzeitlokalisierungs-Funktionalität (RTL), wobei das Kontaktlos-Kommunikationselement (30) eingerichtet ist, zusammen mit einer Transaktionsanordnung (10; 11, 12, 13) eine Kontaktlos-Transaktion gemäß einem Verfahren nach einem der Ansprüche 1 bis 9 auszuführen.

11. Kontaktlos-Kommunikationselement (30) nach Anspruch 10, wobei das Kontaktlos-Kommunikationselement (30) als UHF-RFID-Etikett ausgestaltet ist und/oder einen Prozessor und auf dem Prozessor ausführbare Applikationen umfasst und/oder einem Konto einer Person (40) eindeutig zugeordnet ist, zu dessen Lasten die Kontaktlos-Transaktion ausgeführt wird.

12. Portabler Datenträger in Form einer Chipkarte oder eines Telekommunikationsendgeräts, wobei der Datenträger auf eine Person (40) personalisiert ist und an dem Datenträger ein Kontaktlos-Kommunikationselement (30) nach Anspruch 10 oder 11 angebracht ist, welches einem Konto der Person (40) eindeutig zugeordnet ist, zu dessen Lasten die Kontaktlos-Transaktion ausgeführt wird.

13. Transaktionsanordnung (10; 11, 12 ,13), umfassend zumindest eine Sendeeinrichtung (12), eingerichtet zur Erzeugung eines elektromagnetischen Kommunikationsfeldes (16), zumindest eine Leseeinrichtung (11), eingerichtet zum Empfang von Signalen von in dem Kommunikationsfeld (16) befindlichen Kontaktlos-Kommunikationselementen (14, 15, 30, 31, 32, 33), sowie eine Steuereinrichtung (13), eingerichtet zur Ausführung einer Kontaktlos-Transaktion mit einem in dem Kommunikationsfeld (16) befindlichen Kontaktlose-Element (30) einer Person (40), wobei die Transaktionsanordnung (10; 11, 12, 13) ausgestaltet und eingerichtet ist, die Kontaktlos-Transaktion gemäß einem Verfahren nach einem der Ansprüche 1 bis 9 mit einem Kontaktlos-Kommunikationselement (30) nach Anspruch 10 oder 11 oder einem an einem Datenträger gemäß Anspruch 12 angebrachten Kontaktlos-Kommunikationselement (30) auszuführen, wobei die zumindest eine Leseeinrichtung (11) Lokalisierungssignale von dem Kontaktlos-Kommunikationselement (30) empfängt und die Steuereinrichtung (13) eine Echtzeitlokalisierungs-Funktionalität (RTL) verwirklicht und eingerichtet ist, das Kontaktlos-Kommunikationselement (30) in dem Kommunikationsfeld (16) zu lokalisieren.

14. Transaktionsanordnung (10; 11, 12, 13) nach Anspruch 13, umfassend ein oder mehrere von dem Kontaktlos-Kommunikationselement (30, 31, 32, 33) der Person (40, 41, 42, 43) verschiedene weitere Kontaktlos-Kommunikationselemente (14,15), wobei die Steuereinrichtung (13) eingerichtet ist, das Kontaktlos-Kommunikationselement (30) der Person (40) gemäß Kriterien zu lokalisieren, welche einen Bezugspunkt oder Bezugsbereich betreffen, welcher von zumindest einem der weiteren Kontaktlos-Kommunikationselemente (14,15) abhängig ist.

15. Transaktionssystem (10, 30; 11, 12, 13, 30), umfassend ein Kontaktlos-Kommunikationselement (30) nach Anspruch 10 oder 11 oder einen portablen Datenträger nach Anspruch 12 sowie eine Transaktionsanordnung (10; 11,12,13) nach Anspruch 13 oder 14, wobei das Kontaktlos-Kommunikationselement (30) der Person (40) oder ein an dem Datenträger der Person (40) angebrachtes Kontaktlos-Kommunikationselement (30) und die Transaktionsanordnung (10; 11, 12, 13) eingerichtet sind, gemeinsam ein Verfahren nach einem der Ansprüche 1 bis 9 auszuführen.
